# EUROPEAN PATENT APPLICATION

(11) **EP 2 204 776 A1**
(43) Date of publication of application: **07.07.2010**
(21) Application number: 08843421.2
(22) Date of filing: 29.10.2008
(51) Int. Cl.: G06T 17/40, A63B 69/00, A63B 71/06, A63F 13/00

(54) **IMAGE PROCESSING DEVICE, IMAGE PROCESSING METHOD, INFORMATION RECORDING MEDIUM AND PROGRAM**

(30) Priority: 01.11.2007 JP 2007284836
(71) Applicant: Konami Digital Entertainment Co., Ltd., Tokyo 107-8324 (JP)
(72) Inventor: ASAMI, Yuichi, Tokyo 107-8324 (JP)
(74) Representative: Rüger, Barthelt & Abel Patentanwälte
(86) International application number: PCT/JP2008/069693
(87) International publication number: WO 2009/057661

(57) **Abstract**

A storage unit (201) stores a shape, a position, and an orientation of real image objects situated in a three dimensional virtual space. It also stores a position of a view point, a direction of a sight line, and a position, an orientation, etc. of a virtual mirror plane which represents a virtual mirror. An updating unit (202) updates values stored in the storage unit (201) in response to input of user instructions. A mirror image arranging unit (203) allocates a suitable mirror image object in a side of the virtual mirror plane opposite to the real image object. A determining unit (204) determines whether or not the real image object overlaps with and hides the mirror image object when the virtual space is viewed from the point of view in the direction of the sight line. According to the determination, an adjustment unit (205) moves the mirror image object to a position in which mirror image object may be more observable. A generating unit (206) projects the virtual space on a two dimensional plane.

## Description

The present invention relates to an image processing device, a method for processing an image, an information recording medium, and a program that are suited for use in displaying a three-dimensional virtual space in which an object is situated and capable of being displayed in multiple perspectives using a mirror image.

Sport training systems are currently available that display a motion and a posture of a sport instructor viewed from multiple angles guiding a player training motion. One such training system is disclosed in Patent Literature 1 in which the system achieves an effective and enjoyable exercise for a user by displaying on the monitor varied views of a human similitude character object, such as a front view, a rear view and a top view thereof, switching in every small time frame e.g. one second.
Patent Literature 1: Unexamined Japanese Patent Application KOKAI Publication No. 2004-105220

### Disclosure of the Invention

### Problems to be Solved by the Invention

A typical way to simultaneously obtain multiple perspectives of a real world object is to use a mirror. Mirrors are familiar to humans, so that we can instantly recognize from which direction the object is seen. However, mirrored images are sometimes hard to see when the images are hidden by the real image in a certain angle of view. As Patent Literature 1 discloses, displaying an object in varied views by changing the position of the view point every small time frame provides omni-directional perspectives of the object. Nevertheless, when the views are changed every small time frame, a continuous movement is displayed discontinuously. Moreover, those multiple views can't be displayed simultaneously. These shortcomings are disadvantageous.

The present invention is made to overcome the above problem, and an object of the present invention is to provide an image processing device, a method for displaying an image, an information recording medium that can suitably display a three-dimensional virtual space in which an object is situated and the object can be displayed in multiple views using a mirror image.

### [Means for Solving Problem]

To achieve the above objective, an image processing device according to a first aspect of the present invention includes a storage unit that stores a position of a viewpoint situated in a virtual space and a direction of a sight line, a shape, a position and an orientation of a real image object situated in the virtual space, a position and an orientation of a virtual mirror plane situated in the virtual space, a shape, a position and an orientation of a mirror image object situated in the virtual space.

The viewpoint is a virtual camera that observes the three dimensional virtual space, and the sight line is a direction in which the camera faces. A two-dimensional image of the virtual space is created by projecting, on a two-dimensional plane (also called a projection surface), the virtual space seen from the viewpoint of the sight line. A real image object comprises including the character allocated in a three-dimensional space. The shape of each real image object is defined (modeled) by a surface composed of e.g. a very small polygonal geometry called a polygon.

Furthermore, a virtual mirror plane serving as a virtual mirror is situated in the virtual space in order to render a reflection of the real image object on the mirror. On an appropriate position opposite to the viewpoint with respect to the virtual mirror, a mirror image object of an appropriate shape that faces in an appropriate direction is disposed by a mirror image allocation unit that will be described later. The mirror image object is a reflection of the real image object. A generating unit, which will be described later, projects the mirror image object that is seen from the viewpoint of the sightline. A mirror image of the real image object is thus generated.

The image processing device includes an updating unit that updates at least the shape, the position, and the orientation of the real image object. Furthermore, the updating unit can update the position of the viewpoint, or the direction of the sight line stored in the storage unit in accordance with instruction input by a user or in accordance with a passage of time.

The updating unit updates a sight line vector that represents the position of the viewpoint and the direction of the sight line that is stored in the storage unit, when an instruction is input by a user through an input device. The input device may be a conventional input device such as a game pad, in which the instructions require changes in a parameter that specifies the position of the virtual camera (viewpoint), the orientation of the virtual camera (the direction of the sight line), and the magnification of the image obtained by the virtual camera, or other parameters.

The virtual mirror plane has an infinite expanse and, the virtual mirror plane is assumed to divide the virtual space into two spaces, a real image space and a mirror image space. If the user attempts to move the virtual camera to the back of the virtual mirror plane (i.e. toward the inside of the mirror image space), the virtual camera is moved as if it is bounced off the mirror: it should be configured so that the entry of the virtual camera into the mirror image space is prohibited.

With an instruction from a user to change the parameters that specify the position and the orientation of the real image object, the updating unit updates the position and the orientation of the real image object by simultaneously moving or rotating the real image object in the three-dimensional space in accordance with the instruction input.

The image processing device further includes a mirror image allocation unit that calculates a shape, a position and an orientation of a mirror image object that represents a mirror image of the real image on the virtual mirror plane and stores the shape, the position and the orientation in the storage unit.

As described above, in the image processing device of the present application, a virtual mirror plane serving as a virtual mirror is situated in the three-dimensional virtual space. The mirror image allocation unit allocates a mirror image object that represents the mirror image of the real image object located in an appropriate position at the side opposite from where the viewpoint is allocated, with an appropriate orientation. Projecting the mirror image object on the projection surface represents the mirror reflecting the real image object.

The image processing device further includes a determination unit that determines whether the real image object and the mirror image object are close to each other in the view when viewed in the direction of the sight line from the position of the viewpoint in the virtual space.

Hidden in the back of the real image object, a part of the mirror image object may sometimes be unobservable from the viewpoint when the virtual space is seen in the direction of the sight line from the position of the viewpoint. Even though the whole of the mirror image object can bee seen at one moment, there may be a possibility that a real image object (or a mirror image object) changing the posture hides a part of the mirror image object because the mirror object is excessively close to the real image object.

In the embodiments of the present invention, a state where a mirror image object and the mirror image object are close to each other in the view refers to the above-described state, in which, hidden in the back of the real image object, a part of the mirror image object may sometimes be unobservable from the viewpoint when the virtual space is seen in the direction of the sight line from the position of the viewpoint. Or, it refers to the state where, even though the mirror image object can bee seen at a present moment, there may be a possibility that a real image object (or a mirror image object) changing the posture hides a part of the mirror image object because the mirror object is excessively close to the real image object. The determination unit determines whether the predetermined condition is satisfied and determines whether the real image object and the mirror image object are close to each other in the view.

The image processing device includes an adjusting unit that, when it is determined that the real image object and the mirror image object are close to each other in the view, adjusts the position of the mirror image object stored in the storage unit so that the real image object and the mirror image object are not close to each other in the view.

When the determination unit determines that the real image object is too close to the mirror image object or the real image object hides a part of the mirror image object, the adjusting unit adjusts the position and the orientation of the mirror image object so that the mirror image object can be more viewable, when viewed from the viewpoint in the direction of the sightline.

The image processing device includes a generating unit that generates an image in which the virtual space is viewed in the direction of the sight line from the viewpoint, based on the shape, the position and the orientation of the stored real image object, the position of the viewpoint and the direction of the sight line, and the shape, the position and the orientation of the mirror image object.

That is, the generating unit maps and renders images of all the objects within the three-dimensional virtual space on the projection surface in order to map three-dimensional images on a two-dimensional space. The generating unit stores the rendered image data in, for example, a frame buffer, and transfers the contents of the frame buffer when a vertical synchronous interruption occurs.

In this way, in order for the mirror image object to be easily seen from the player, the image processing device according to the present invention adjusts the position and orientation of the mirror image object when allocating the mirror image object in the virtual space.

Further, the adjusting unit may rotate the mirror image object about a predetermined rotation axis that passes the viewpoint to adjust the position and the orientation of the mirror image object.

That is, the adjusting unit simultaneously moves the orientation of the mirror image object while keeping a distance between the viewpoint and the mirror image object so that the orientation of the mirror image object with respect to the viewpoint is not changed even after moving.

The adjusting unit may adjust the position of the mirror image object by moving the mirror image object in parallel with a surface of a floor situated in the virtual space while keeping a distance between the mirror image object and the viewpoint.

That is, the adjusting unit moves the position of the mirror image object in parallel with the surface of the floor while keeping the distance between the viewpoint and the mirror image object, in the same way as rotating the mirror image object about the predetermined rotation axis. However, the orientation of the mirror image object is not changed and maintained after moving.

The determination unit may determine that the real image object and the mirror image object are close to each other in the view when the real image object and the mirror image object are projected on a projection surface situated at a position that is a predetermined distance apart in the direction of the sight line from the position of the viewpoint, and the projections overlap with each other.

That is, the determination unit determines that the real image object and the mirror image object are close to each other in the view when the real image object and the mirror image object are overlapped with each other when viewed from the viewpoint in the direction of the sight line.

Further, each of the real image object and the mirror image object may be associated with a spherical bounding area that envelops the respective real image object and the mirror image object, and the determination unit may determine that the real image object and the mirror image object are close to each other in the view, and the adjusting unit may adjust the projected images so as to touch each other when the respective bounding areas of the real image object and the mirror image object are projected on a projection surface disposed at a position that is a predetermined distance apart in the direction of the sight line from the position of the viewpoint, and the projected images overlap with each other.

Here, the bounding area defines a boundary within which each of the real image object and the mirror image object can change its posture while its position is fixed. When a bounding area of the real image object and a bounding are of the mirror image object overlap with each other, viewed in the direction of the sightline from the viewpoint, there may be a possibility that both objects overlap with each other in the view. Therefore, in that case, the determination unit determines that the two objects are close to each other in the view. Then the adjusting unit adjusts the position of the mirror image object so that the bounding areas of the both objects touch each other, that is, the distance between both objects are the shortest to an extent both objects do not overlap with each other.

When adjusting the position of the mirror image object, the adjusting unit may adjust the position of the viewpoint stored in the storage unit by an amount that is associated in advance with the amount of adjustment, and adjust the direction of the sightline stored in the storage unit by an amount that is associated in advance with the amount of adjustment.

Adjusting the position of a mirror object may sometimes produce a noticeably unnatural mirror image. The adjusting unit may adjust the position of the viewpoint and the direction of the sight line in order to generate an appearance that looks more natural.

A method for processing an image for controlling an image processing device according to another aspect of the present invention includes steps to control a storage unit, an updating unit, a mirror image allocation unit, a determination unit, an adjusting unit and a generating unit.

First, in a storing step, the storage unit stores a position of a viewpoint situated in a virtual space, a direction of a sight line, a shape, a position, an orientation of a real image object situated in the virtual space, a position, an orientation of a virtual mirror situated in the virtual space, a shape, a position and an orientation of a mirror image object situated in the virtual space.

In an updating step, the updating unit updates, at least any of the shape, the position and the orientation of the real image object stored in the storage unit, the position of the viewpoint, or the direction of the sight line, in accordance with an instruction input by a user or a in accordance with the passage of time.

In a mirror image allocation step, the mirror image allocation unit calculates a shape, a position and an orientation of a mirror image object that represents a mirror image of the real image on the virtual mirror and stores the shape, the position, and the orientation in the storage unit.

In a determining step, the determination unit determines whether the real image object and the mirror image object are close to each other in the view when viewed in the direction of the sight line from the position of the viewpoint in the virtual space.

In an adjusting step, the adjusting unit adjusts the position of the mirror image object stored in the storage unit so that the real image object and the mirror image object are not close to each other in the view, when it is determined that the real image object and the mirror image object are close to each other in the view.

In a generating step, the generating unit generates an image in which the virtual space is viewed in the direction of the sight line from the viewpoint, based on the shape, the position and the orientation of the stored real image object, the position of the viewpoint and the direction of the sight line.

A program according to another aspect of the present invention causes a computer to serve as the image processing device as described above. The program according to another aspect of the present invention causes the computer to execute the above-described method for processing an image.

The program according to the present invention can be recorded on a computer-readable information recording medium such as a compact disc, a flexible disc, a hard disk, a magneto-optical disc, a digital video disc, a magnetic tape and a semiconductor memory. The program can be distributed and sold via a computer communication network independently from a computer on which the program is executed. The above-described information recording medium can be distributed or sold independently from the computer.

### Effect of the Invention

The present invention can provide an image processing device, a method for displaying an image, an information recording medium that can suitably display a three-dimensional virtual space in which an object is situated and the object can be displayed in multiple views using a mirror image.

### Brief Description of Drawings

Fig. 1 is a schematic diagram showing a game device in which the image processing device, etc. according to the embodiments of the present invention are achieved.
Fig. 2 is an illustration that shows a schematic configuration of the image processing device according to an embodiment of the present invention.
Fig. 3 is a diagram showing an exemplary arrangement of a target (real image) object, a virtual mirror plane, and a mirror image object.
Fig. 4 is a flowchart illustrating an operation of the image processing device according to the embodiments of the present invention.
Fig. 5A is a diagram showing a relationship between a real image object and a mirror image object seen from the top, in which a planer virtual mirror plane is used.
Fig. 5B is a diagram showing a relationship between a real image object and a mirror image object seen from the top, in which a spherical virtual mirror plane is used.
Fig. 6A shows the manner of adjusting a mirror image object by rotating the mirror image about a predetermined rotation axis that passes the viewpoint.
Fig. 6B shows the manner of adjusting a mirror image object by moving the mirror image object in parallel with a floor surface while keeping a predetermined distance therebetween.
Fig. 7 is a diagram showing an area of the mapping area that reduces as a distance from the viewpoint increases.
Fig. 8A shows an example in which at least one virtual mirror plane is used and objects are viewed from the top, and the objects are yet to be adjusted by the adjusting unit.
Fig. 8B shows an example in which at least one virtual mirror plane is used and objects are viewed from the top, having been adjusted by the adjusting unit.
Fig. 9A shows another example in which at least one virtual mirror plane is used and objects are viewed from the top, and the objects are yet to be adjusted by the adjusting unit.
Fig. 9B shows an example in which at least one virtual mirror plane is used and objects are viewed from the top, and mirror objects have been adjusted by the adjusting unit.
Fig. 10 shows a top view of an area close to the boundary of the virtual mirror.

### Explanations of Reference Numerals

- 100: Game device
- 101: CPU
- 102: ROM
- 103: RAM
- 104: Interface
- 105: Controller
- 106: External memory
- 107: Image processing unit
- 108: DVD-ROM drive
- 109: NIC
- 110: Sound processing unit
- 200: Image processing device
- 201: Storage unit
- 202: Updating unit
- 203: Mirror image allocation unit
- 204: Determination unit
- 205: Adjusting unit
- 206: Generating unit

### Best Mode for Carrying Out the Invention

Embodiments of the present invention will be described below. For ease of understanding, the embodiments below of the present invention are described as applications to game devices. However, the present invention may be similarly applied to information processing devices, such as various computers, PDAs, and mobile phones. In other words, the embodiments described below are provided to give an explanation, not to limit the scope of the present invention. Therefore, those skilled in the art can adopt embodiments in which some or all of the elements herein have been replaced with respective equivalents, and such embodiments are also included within the scope of the present invention.

### [Embodiments]

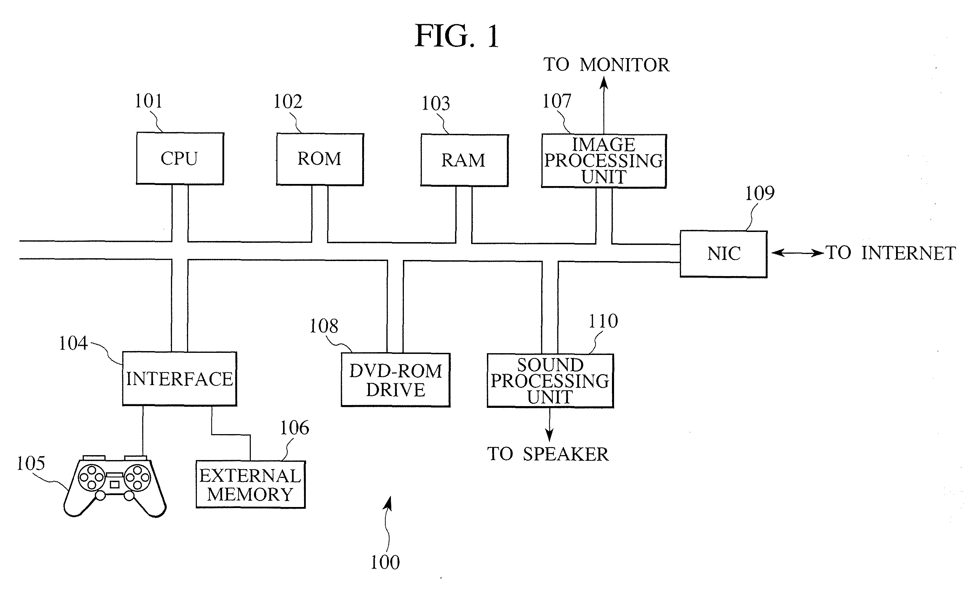

FIG. 1 is a schematic diagram showing an overview of a configuration of a typical game device by which an image generating device according to an embodiment of the present invention is realized. The following explanation will be given with reference to FIG. 1.

A game device 100 includes a Central Processing Unit (CPU) 101, a Read Only Memory (ROM) 102, a Random Access Memory (RAM) 103, an interface 104, a controller 105, an external memory 106, an image processing unit 107, a Digital Versatile Disk (DVD)-ROM drive 108, a sound processing unit 110, and a Network Interface Card (NIC) 109.

When a DVD-ROM that stores a game program and game data is inserted to the DVD-ROM drive 107 and the game device 100 is turned on, the program is executed and the image processing device according to the present embodiment is realized.

The CPU 101 controls the operation of the whole game device 100, and is connected to each component to exchange control signals and data with it.

The Rom 102 stores an Initial Program Loader (IPL), which is executed immediately after the power is turned on, and when executed, the Initial Program Loader makes a program stored on the DVD-ROM be read into the RAM 103 and executed by the CPU 101. Further, an operating system program and various data that are necessary for controlling the operation of the whole game device 100 are stored in the ROM 102.

The RAM 103 is a temporary memory for data and programs, and retains a program and data read out from the DVD-ROM and data necessary for game progressing and chat communications.

The controller 105 connected via the interface 104 receives an operation input given by a user when the user is playing a game. For example, the controller 105 receives input of a letter string (a message) in accordance with the operation input.

The external memory 106 detachably connected via the interface 104 stores data representing log data of chat communications, etc. in a rewritable manner As needed, a user can store such data into the external memory 106 by entering an instruction input via the controller unit 105.

A DVD-ROM to be loaded in the DVD-ROM drive 108 stores a program for realizing a game and image data and sound data that accompany the game. Under the control of the CPU 101, the DVD-ROM drive 108 performs a reading process to the DVD-ROM loaded therein to read out a necessary program and data, which are to be temporarily stored in the RAM 103, etc.

The image processing unit 107 processes data read from a DVD-ROM by means of the CPU 101 and an image calculation processor (not shown) possessed by the image processing unit 107, and stores the processed data in a frame memory (not shown) possessed by the image processing unit 107. Image information recorded in the frame memory is converted to video signals at predetermined synchronization timings and displayed on a monitor (not shown) connected to the image processing unit 107. This enables various types of image display.

The image calculation processor can perform, at a high speed, overlay calculation of two-dimensional images, transparency calculation such as α blending, etc., and various saturation calculations.

The image calculation processor can also execute a high-speed calculation of polygon display information that is situated within a virtual three-dimensional space and affixed with various texture information by Z buffering and obtaining a rendered image of the polygon situated in the virtual three-dimensional space as seen down from a predetermined view position.

Furthermore, the CPU 101 and the image calculation processor can operate in conjunction to depict a string of letters as a two-dimensional image in the frame memory or on each polygon surface in accordance with font information that defines the shape of the letters. The font information is stored in the ROM 102, but dedicated font information stored in a DVD-ROM may be used.

The NIC 109 connects the game device 100 to a computer communication network (not shown) such as the Internet, etc. The NIC 109 includes a 10BASE-T/l00BASE-T product used for building a Local Area Network (LAN), an analog modem, an Integrated Services Digital Network (ISDN) modem, or an Asymmetric Digital Subscriber Line (ADSL) modem for connecting to the Internet via a telephone line, a cable modem for connecting to the Internet via a cable television line, or the like, and an interface (not shown) that acts as an intermediate between any of these and the CPU 101.

Information of current date, time can be obtained by connecting to an SNTP server in the Internet via the NIC 109, and obtaining information therefrom. Various network game server devices can achieve a same function as the SNTP server.

The sound processing unit 110 may convert sound data read out from a DVD-ROM into an analog sound signal and outputs such sound signal from a speaker (not shown) connected thereto. Under the control of the CPU 101, the sound processing unit 109 generates a sound effect or music data that is released during the progress of a game, and outputs a sound corresponding to the data from the speaker.

The game device 100 may use a large capacity external storage device such as a hard disk or the like and configure it to serve the same function as the ROM 102, the RAM 103, the external memory 106, a DVD-ROM loaded in the DVD-ROM drive 107, or the like.

An ordinary computer may be used to realize the image processing device 200 according to the present embodiment instead of the game device 100 and a portable game device. For example, like the game device 100 described above, an ordinary computer may include a CPU a RAM, a ROM, a DVD-ROM drive, and an NIC, an image processing unit with simpler capabilities than those of the game device 100, and a hard disk drive as its external storage device with also compatibility with a flexible disk, a magneto-optical disk, a magnetic tape, etc. Such a computer uses a keyboard, a mouse, etc. instead of a controller as its input device. When a game program is installed on the computer and executed, the computer functions as the image generating device.

Unless otherwise noted, the following describes an image processing device 200 by using the game device 100 shown in FIG. 1. The image processing device 200 can be suitably replaced with elements of ordinary computer. Those embodiments are also included in the scope of the present invention.

### (Outline of the image processing device)

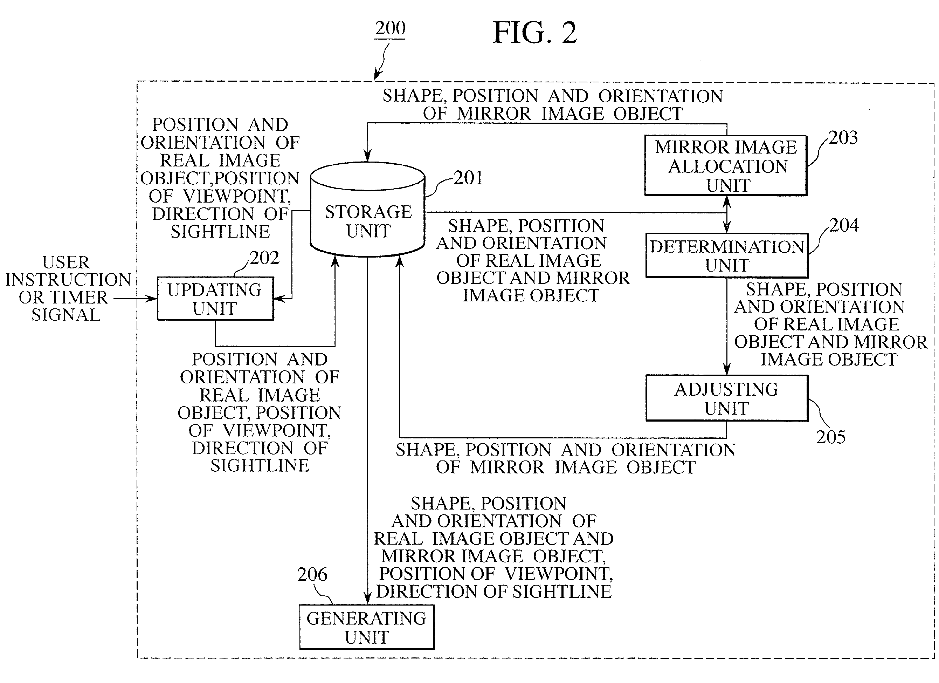

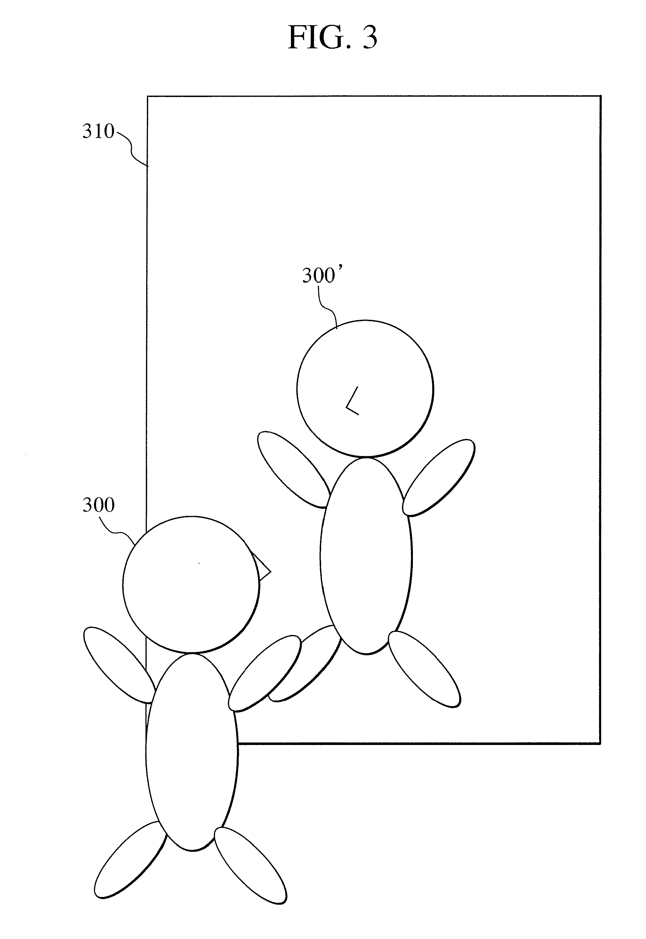

FIG. 2 is a schematic diagram showing an outline of the image processing device according to the embodiments of the present invention. The following explanation refers to Fig. 2.
In the present embodiments, as shown in FIG. 3, the real image object (character) 300 and one planer virtual mirror (virtual mirror plane) 310 are allocated in the virtual space. FIG. 3 describes a display in which an object is seen from two directions by allocating a mirror image object 300' that represents a mirror image of the real image object so that the mirror image of the real image object 300 is reflected on the virtual mirror plane.

In the embodiments, the virtual mirror plane 310 is not an object actually allocated in the virtual space, but an object used for obtaining a shape and a position of the mirror image object 300. However, for ease of understanding, this drawing clearly depicts the outline of the virtual mirror plane 310.

The image processing device 200 displays a real image object and the mirror object of the real image object in consideration of the position and orientation of the real image object within the three-dimensional virtual space and the position of the virtual camera (viewpoint) that change according to the instruction from the user or the elapse of the time. As shown in FIG. 2, the image processing device comprises a storage unit201, an updating unit 202, a mirror image allocation unit 203, a determination unit 204, an adjusting unit 205 and a generation unit 206, etc.
The following describes each element of the image processing device 200.

The storage unit 201 stores various information used for rendering the inside of the three-dimensional virtual space. First, the storage unit 201 stores information of shape of each element (called an object, or called a model) within the three-dimensional virtual space. Each object is rendered to have a shape expressed by combinations of surfaces defined by small time frame geometries (for example, a triangle and a rectangle) called polygon.

The storage unit 201 stores a shape, a position and an orientation within the virtual space of each object (including both of a real image object, and a later-described mirror image object that is computed by the mirror image allocation unit 203).
For example, the storage unit 201 stores a global coordinate system (world coordinate system) that represents the entirety of the virtual space and a local coordinate system fixed for each object. Typically, a representative point of the object (for example, the barycenter) is an origin of the local coordinate system, and a surface shape of an object (i.e. the shape of each constituent polygon of an object and the position at which each constituent polygon is located) is described based on the local coordinate system. On the other hand, the position of each object is defined based on the global coordinate system. Then, the orientation of the object is defined by a direction vector extending in the forward direction from the representative point of the object in the global coordinate.

The position information may be defined by an orthogonal coordinate system, and may be represented by a polar coordinate system using a moving radius and two amplitudes by denotations (r, θ, ϕ).

Further, the storage unit 201 stores a position and an orientation of a virtual mirror surface (hereafter called as a virtual mirror plane) and a position of the viewpoint and the direction of the sight line. Here, the position of the viewpoint is the position from which the virtual camera sees the object in the virtual space. Typically, the position is defined in the global coordinate system. On the other hand, the direction of the sight lines is the direction in which the virtual camera (viewpoint) sees the virtual space. In addition, the storage unit 201 stores the position and the orientation of a projection surface on which the virtual space is projected.

The global coordinate system and the local coordinate system are also used to define the position or the orientation of the virtual mirror plane, the viewpoint and the projection surface, in the manner as described above.
The position and the orientation of the projection surface is calculated when the later-described updating unit 202 updates the position and orientation, etc. of the virtual camera, based on the value updated by the later-described updating unit 202.

Further, the storage unit 201 stores image data called a texture which is attached to a surface of each object. The storage unit 201 also stores a position, etc. of a light source that lightens the virtual space. By attaching texture information to the surface shape of each object, it is possible to express the texture of the object.

The information stored in the storage unit 201 is stored in advance in, for example, a DVD-ROM, and the CPU 101 reads out the information from the DVD-ROM loaded on the DVD-ROM drive 108, and temporarily stores the read information in RAM 103. Or, the information stored in an external memory 106 may be read out by the CPU 101 and temporarily stored in RAM 103. The CPU 101 may update at any time the temporarily stored information, for example, in accordance with the progress of the game. Accordingly, the CPU 101, RAM 103, DVD-ROM drive108 cooperate with each other to serve as a storage unit 201.

Next, the updating unit 202 updates the position and the orientation of the real image objects stored in the storage unit 201, based on the user instructions input by operating the input devices connected via the interface 104, or user instruction made by a computer program, etc. The updating unit 202 also calculates the position of the viewpoint, and the direction of the sight line, in accordance with the updated position of the viewpoint and the direction of sightline. Further, the updating unit 202 calculates the position and the orientation of the projection surface based on the position of the viewpoint and the direction of the sightline that have been updated. The CPU 101 and RAM 103 cooperate with each other to serve as an updating unit 202.

The mirror image allocation unit 203 allocates mirror image objects in view of the orientation and the position of the object within the virtual space updated by the updating unit 202 in the side opposite, with respect to the virtual mirror plane, of the side in which the viewpoint and the object are located in order to generate mirror images of objects within the virtual space. The shape of the mirror image object, the position at which the mirror image object is located and the position are stored in the storage unit 201. Then, the generation unit 206 that will be described later projects the mirror image object on the projection surface to produce the virtual mirror image. The CPU 101 and RAM 103 operate together to serve as a mirror image allocation unit 203.

The determination unit 204 determines whether the real image object and the mirror image object are close to each other in the view when they are seen from the position of the viewpoint in the direction of the sight line in the virtual space. As discussed above, in the present embodiment, the state in which a real image object hides a mirror image object when the virtual space is seen from the position of the viewpoint in the direction of the sight line, or the state in which the real image object could hide the mirror image object when it changes its position, is expressed as "real image object and mirror image object are close to each other in the view". For example, the state of FIG. 3 in that the foot of the observer's left of the mirror image object is hidden by the right hand of the real image object 300, is the state that the real image object and the mirror image object are close to each other in the view.

The determination unit 204 serves to determine the state in which the real image object and the mirror image object are close to each other in the view. The CPU 101 and the RAM 103 cooperate to serve as a determination unit 204.

When the determination unit 204 determines that that the real image object and the mirror image object are close to each other in the view, the adjusting unit 205 adjusts the position and the orientation of the mirror image object and allocates the mirror image object away from the real image object. The CPU 101 and the RAM 103 cooperate with each other to serve as the adjusting unit 205.

The generation unit 206 generates image data for display on a monitor or other devices based on the position and the orientation of the object updated by the updating unit 202, and the position of the viewpoint and the position and the orientation of the projection surface, by projecting each object from the viewpoint on the projection surface within a three-dimensional virtual space. In the present embodiment, by way of example, each object is projected by one-point perspective projection. The CPU 101, the RAM 103, and image processing unit 107 cooperate with each other to serve as a generation unit 206.

### (Operation of the image processing device)

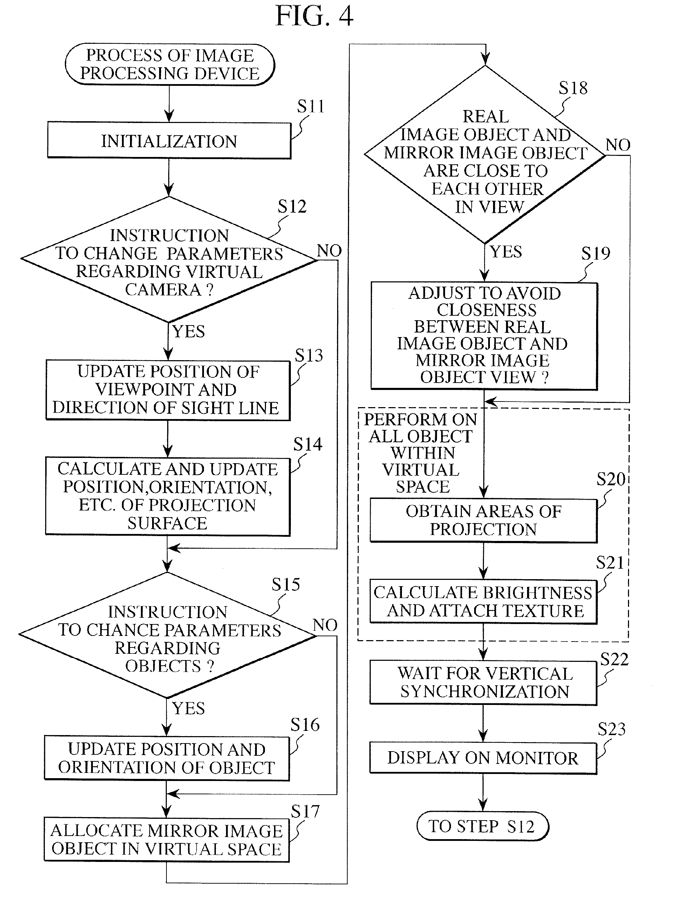

The operation of the image processing device 200 having the above-described configuration is described with reference to FIG. 4.

After the power is turned on in the image processing device to start the processing, information needed for the RAM 103 (e.g. the position and the orientation of the virtual camera, the shape, the position and the orientation of the object) is read and the storage unit 201 is initialized (step S 11).

The user can issue an instruction to change, by using user controller 105, parameters, such as, the position of the virtual camera (viewpoint), the orientation of the virtual camera (direction of the sightline), the magnification of the virtual camera, besides the position and the orientation of the object, the motion of the object.

First, the updating unit 202 determines if the user has input an instruction to change the parameters related to the virtual camera (step S12). If there was an instruction input (step S12;Y), the updating unit 202 updates the position and the orientation of the virtual camera stored in the storage unit 201 in accordance with the instruction (step S13). Further, the updating unit 202 calculates the position and orientation by which the projection surface on which the virtual space, seen from the viewpoint in the direction of the sight line, is projected is located in the virtual space, based on the updated position and orientation of the virtual camera, and the magnification (step S14).

That is, the updating unit 202 calculates an orientation orthogonal to a sight line vector (a vector that represents the orientation of the sightline) originating from the viewpoint and determines the orientation as the orientation of the projection surface. To zoom in, the projection surface is interpreted as approaching the object within the three-dimensional space (to come away from the viewpoint), and, to zoom out, the projection surface is interpreted as retreating away from the object (approaching the viewpoint). To change the orientation of the sight line vector (i.e. to pan the virtual camera), the orientation of the projection surface is changed in accordance with the orientation of the sight line vector. The updating unit 202 determines the position and the orientation of the projection surface based on the position of the viewpoint and the orientation in which the viewpoint sees (the orientation of the sight line vector) and magnification, and stores it to the storage unit 201 and updates it.
If there is no instruction input from the user to change the parameters of the virtual camera (step S12; N), the process proceeds to step S15.

Next, the updating unit 202 determines if the instruction input is made by the user regarding the position and the orientation of the object (step S15). With an instruction input (step S15; Y), the updating unit 202 updates the position and the orientation of the object stored in the storage unit 201 (step S16) by interpreting and rotating the object within the three-dimensional space based on the instruction input. Without an instruction input (step S 15; N) the process proceeds to step S 17.

Parameters such as the position and the orientation of the virtual camera, the magnification, the position and the orientation of the object may be provided from a control program or the like. Or instead, the parameters may be changed into a predetermined value in association with the passage of time or changed at random.

Next, the mirror image allocation unit 203 calculates the shape, position and the orientation of the mirror image object (step S 17) in view of the shape, the position and the orientation of the real image object updated by the updating unit 202, and the position and the orientation of the virtual mirror plane in order to locate the mirror image object on the side opposite to the side where the viewpoint of the virtual mirror plane and the object are located.

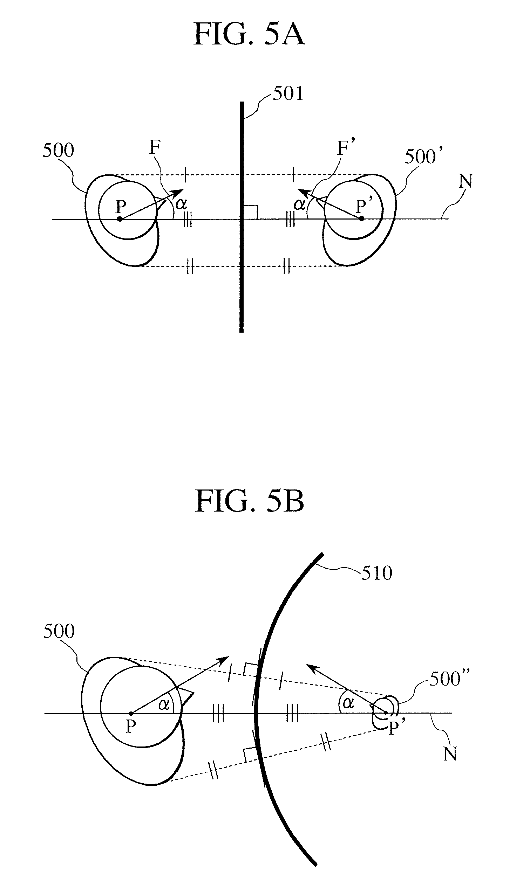

FIG. 5A is a drawing in which the real image object 500 and the mirror image object 500' that is the mirror image of the real image object 500 is seen from the above with the virtual mirror plane 501. In the embodiment, because the virtual mirror plane is planer, the positional relationship between the mirror image object 500'and the real image object500 are plane symmetry with respect to the virtual mirror plane 501, as shown in FIG. 5A.
That is, the shape, the position, and the orientation of the mirror image object 500' are calculated so that each point of a mirror image object 500' locates at a position as follows: when a line is drawn perpendicularly to the virtual mirror plane 501, the position is on the same line in the opposite side with respect to the virtual mirror plane and distant from the virtual mirror by the same distance as that is between the real image object 500 and the virtual mirror.

Accordingly, the mirror image object 500' has a shape that is symmetric to the shape of the real image object 500. The position of the mirror image object 500' (the position of its representative position) is such a point P' as follows: when a line passing through a representative point P of the real image object is drawn perpendicularly from the virtual mirror plane 501, the position of the point P' is on the same line in the opposite side with respect to the virtual mirror plane and distant from the virtual mirror by the same distance as that is between the point P and the virtual mirror virtual mirror plane 501. Further, when an angle formed between the direction vectors of the real image object 500 (for example, a vector indicating the front of the object from the representative point) denoted as F, F and a line extending vertically from the virtual mirror plane 501 is α, the angle between the direction vector F' of the mirror image object 500' and the vertical line N is 180°-α.

In order to make the mirror feel more realistic for the player, it is effective to provide a pattern that is symmetric to the virtual mirror plane 501 on the floor of the virtual space.

In the present embodiment, a planer virtual mirror plane is used. For example, a spherical mirror, whose coordinate may be obtained by a simple conversion, may be used as a virtual mirror plane. When a spherical mirror is used as a virtual mirror plane, the mirror image object can be obtained in the manner as shown in FIG. 5B. The shape, the position and the orientation of the mirror image object 500" are calculated in such a manner as follows: when a line is drawn perpendicularly to the contact surface on each point of the virtual mirror plane 510, each point of the mirror image object 500 is on the same line in the opposite side with respect to the virtual mirror plane and distant from the virtual mirror plane by the same distance as that is between the real image object 500 and the virtual mirror plane 501.

Next, the determination unit 204 determines whether the real image object and the mirror image object are close to each other in the view when the virtual space is viewed in the direction of the sightline from the viewpoint (step S18).
In the present embodiment, respective bounding areas of real image object and the mirror image object are used to determine whether both images are closed to each other in the view. As described above, bounding areas refer to a range within which an object can change its posture with its position being fixed. For example, the bounding area is defined by, for example, a spherical geometry having a radius that is the maximum reach of the object being fixed at a position with the barycenter of the object being taken as a central point.

The determination unit 204 determines that the real image object and the mirror image object are close to each other in the view when the respective bounding areas of the real image object and the mirror image object overlap each other in the view when viewed in the direction of the sightline from the viewpoint. This can be determined by projecting the bounding areas of the real image object and the mirror image object to the projection surface and determining whether the regions of the projections overlap each other.

For example, first, arrays comprising array elements that correspond to pixels of a projection surface is prepared. Then, a predetermined value (for example, 1) is stored in the array that corresponds to a region to which the real image object has been projected. Next, a predetermined value (for example, 1) is added to an array that corresponds to a region to which a mirror image object is projected. When the array stores a value that is equal to or greater than the predetermined value (in this case, 2 or greater), the region of the projections can be determined as overlapping with each other.

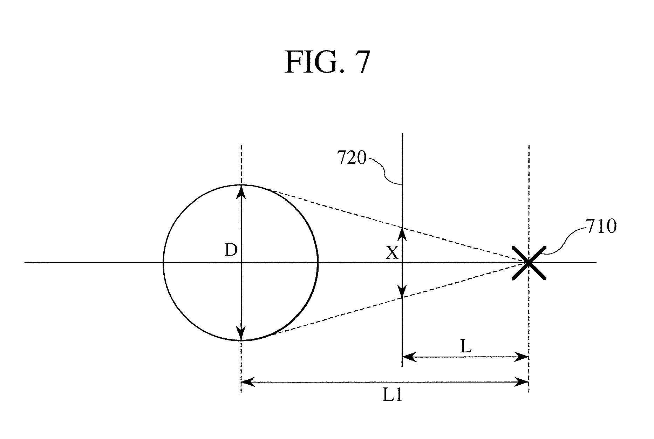

Whether the areas of the projections of the real image object and the mirror image object overlap with each other can be determined based on a distance from the viewpoint to the real image object (or the mirror image object). For example, when one-point perspective projection is used, as the real image object (or the mirror image object) is distant, the area of the projection of the bounding area of the real image object (or mirror image object) becomes small. That is, as shown in FIG. 7, when the diameter of the projection of the bounding area is X, X can be obtained by the following formula X=(L/L1)*D
where the actual diameter of the bounding area is D, the distance from the viewpoint 710 to the projection surface 720 is L, the distance from the viewpoint 710 to the center of the bounding area is L1.

Accordingly, it is determined that both bounding areas overlap with each other when the distance between the two points on the projection surface that correspond to the central points of the respective bounding areas of the real image object and the mirror image object, is smaller than the sum of the radiuses (obtained by dividing the respective diameters by two) of the bounding areas of the real image object and the mirror image object.
When parallel projection is used as a method of projection, the radius of the area of the projection is equal to the value of the radius of the bounding area irrespective of the distance from the viewpoint.

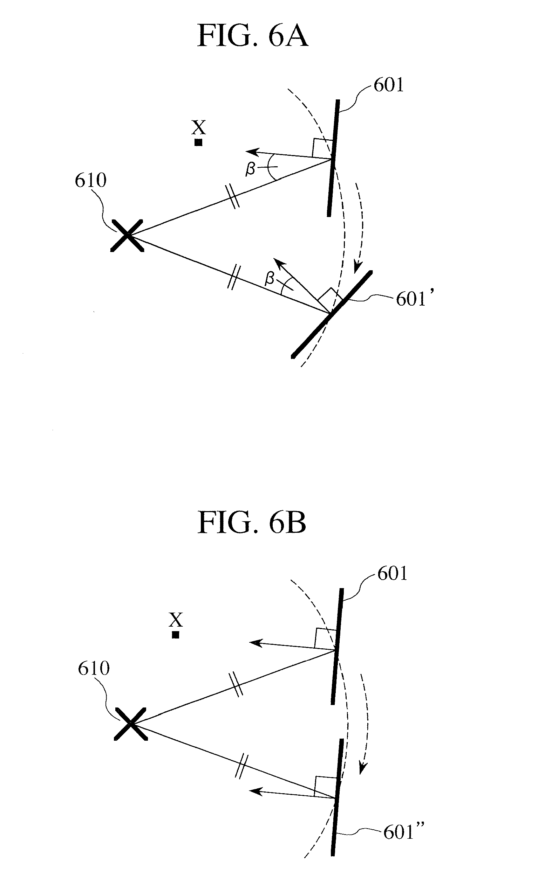

When the determination unit 204 determines that the real image object and the mirror image object are not close to each other (step S18; N), the process proceeds to step S20. On the other hand, when both objects are close to each other (step S 18; Y), the adjusting unit 205 adjusts the position of the mirror image object so that the mirror image object comes away from the real image object on the projection surface (step S19). FIG. 6 shows an overhead view showing the mirror image object 601, the mirror image object 601' whose position and orientation is adjusted by the adjusting unit 205 and the viewpoint 610. In FIG. 6, it is assumed that a representative point of the real image object is located at the point x in the upper left direction of the drawing with respect to the mirror image object 601. In the present embodiment, as shown in FIG. 6A, the position and orientation of the real image object is adjusted so that the distance between the respective representative points of the real image object and the mirror image object 601 projected on the projection surface by rotating the mirror image object 601 about an axis extending perpendicularly to the sheet of the drawing and passing the viewpoint 610.

That is, the mirror image object 601 is moved in parallel to the surface of the floor in the direction indicated by the dotted arrow. In this adjustment, the orientations of the mirror image objects 601 and 602 are adjusted so that the angles formed between the respective direction vectors of the mirror image object 601 and the mirror image object 601' having been moved and the lines extending from their respective representative points to the viewpoint are a same angle β.

Besides, the position of the mirror image object may be adjusted in the manner as shown in FIG. 6B (the mirror image object as adjusted is shown as 601"). That is, only the position of the mirror image may be moved in parallel to the surface of the floor without any change in the orientation of the direction vector.

In either method shown in FIGS. 6A and 6B, when the real image object and the mirror image object completely overlap with each other, the real image object or the mirror image object may be moved in either predetermined one of two directions to come away from each other.

The amount of rotation or the amount of parallel movement may be a predetermined one. Instead, the distance of movement may be such that the respective bounding areas of both images touch each other or be more away from each other when the direction of the sightline is seen from the viewpoint. As stated above, the bounding area refers to an expanse within which each object can change its posture. Therefore, the minimum distance to avoid overlapping between both objects viewed from the viewpoint in the direction of the sightline may be such a distance that the respective bounding areas touch each other in the view. Accordingly, the mirror image object may be moved to come away by the predetermined distance to avoid overlapping between the real image object and mirror image object in the view.

As described in the explanation in step S 18, the respective radiuses of the real image object and the mirror image object in the regions of the projections may be computed based on the distance between each of both objects and the viewpoint. Therefore, the following procedure may be carried out in order that both objects are moved such that the regions in the projections of the respective bounding areas of both objects touch or are more away from each other. In other words, the adjusting unit 205 may move the mirror image object away from the real image object so that the distance between the respective centers of the real image object and mirror image object as being projected on the projection surface is equal to or greater than the sum of respective radiuses of the bounding areas.

Next, the generation unit 206 performs the processes of steps S20 and S21 for all the objects within the virtual space to render the two-dimensional image of the virtual space.

First, the generation unit 206 obtains the area of the regions of the projections of the objects (including a real image object and a mirror image object) (step S20). In the present embodiment, as described above, each object is projected on the projection surface by a one-point perspective projection, an object far away from the viewpoint projects a small projection, and object close to the viewpoint projects a large projection. However, parallel projection may be used instead of the one-point perspective projection.

When the projection is obtained, the generation unit 206 renders the image by attaching (mapping) a corresponding region of the corresponding texture to each region of the projection (step S21). In rendering, the generation unit 206 uses, for example, a Z buffer rendering in order to carry out hidden-surface removal. That is, the generation unit 206 paints each pixel constituting image data to be rendered by a color of texture information that corresponds to a polygon located closest to the viewpoint (projection surface).
The direction of the sightline being the same as the orientation of the surface shape of the polygon, means the surface facing in a direction opposite to the sight line vector. Therefore, the generation unit 206 may not render the surface.

The orientation of each polygon constituting each object with respect to the light source is considered when the texture is attached. That is, the angle between the normal line of each polygon of the surface shape constituting the object and a light source vector is obtained with the brightness set so that the closer the degree is to zero, the higher the brightness of the texture. However, when the texture is changed by multiplying the brightness by a degree of reflection, the brightness is not completely rendered zero even if the angle is formed between the normal line of the polygon and the light source vector. Such configuration allows texture expression (granulated feeling and smooth feeling) in a dark portion. Instead of the angle itself, the cosine of the angle may be obtained from an inner product of the vector so that the closer the value of the inner product is to zero the higher the brightness. Besides, Gouraud shading or Phong shading may be applied so that the difference of brightness is not noticeable in the borders of the polygons.

In this state, both real image object and the mirror image object may be illuminated by a same light source (a light source originally provided in the virtual space). Or, for a more natural showing, the light source may be placed symmetric to the surface of the virtual mirror plane. In this case, both the object and the virtual light source illuminate both of the real image object and the mirror image object. Therefore, in order to effect further natural illumination, the light source for a real image object may only illuminate real image object and the light source for mirror image objects may only illuminate mirror image objects.

Terminating the above image generating process, the generation unit 206 waits until vertical synchronization interruption occurs (step S22). During this stand-by, other processes (for example, updating the positions and the orientations of each objects and the virtual camera based on the passage of time and a process made by the user) execute concurrently.

Upon the occurrence of a vertical synchronization interruption, the generation unit 206 transfers the rendered image data (stored normally in a frame buffer) to the monitor (not shown), displays the image (step S23) and the process goes back to step S12.

The above has described an embodiment of the present invention. However, the present invention is not limited to the above-described embodiments, and various modifications and applications are possible. It is also possible to freely combine the elements described above.

For example, in the above-described embodiment, the determination unit determines, by using bounding areas, whether the real image object and the mirror image object are close to each other in the view when viewed in the direction of the sightline from the viewpoint. Instead, the determination unit may determine that both objects overlap with each other in the view only when both objects overlap with each other in the view when viewed from the viewpoint in the direction of the sightline. Whether the objects overlap with each other in the view is determined based on whether there is an overlap region between the projections of the real image object and the mirror image object.

The overlap between both objects in the regions in the projection surface may be determined by a method that is same as the method to determine the overlapping between the bounding areas. For example, an array having array elements corresponding to the pixels of the projection surface may be prepared and a predetermined value (for example,
1) may be added to the array element that corresponds to the region to which the real image objet is projected. When a value that is equal to or greater than the predetermined value (in this case, a value equal to or greater than 2), it is possible to detect an overlap in the region of the projection.

When the real image object and the mirror image object to be close to each other in the view is the state of view where the real image object and the mirror image object overlap, it is difficult to predetermine the minimum amount of adjustment needed to avoid overlapping in the view, unlike the case where the bounding area is used. Therefore, for example, the adjusting unit may move the mirror image object by a predetermined distance away from the real image object and determine whether there is any overlapping between both projections in the region of the projection. Then the mirror image object may be moved by a predetermined distance until the regions of the projections of both objects do not overlap.

In this case, as describe above, the adjusting unit may rotate the mirror image object about a predetermined rotation axis passing the viewpoint or move the mirror image in parallel with the floor surface located in the virtual space while keeping its distance from the floor surface.

Furthermore, although the above embodiment used one virtual mirror plane, the number of the virtual mirror planes is not limited to one.

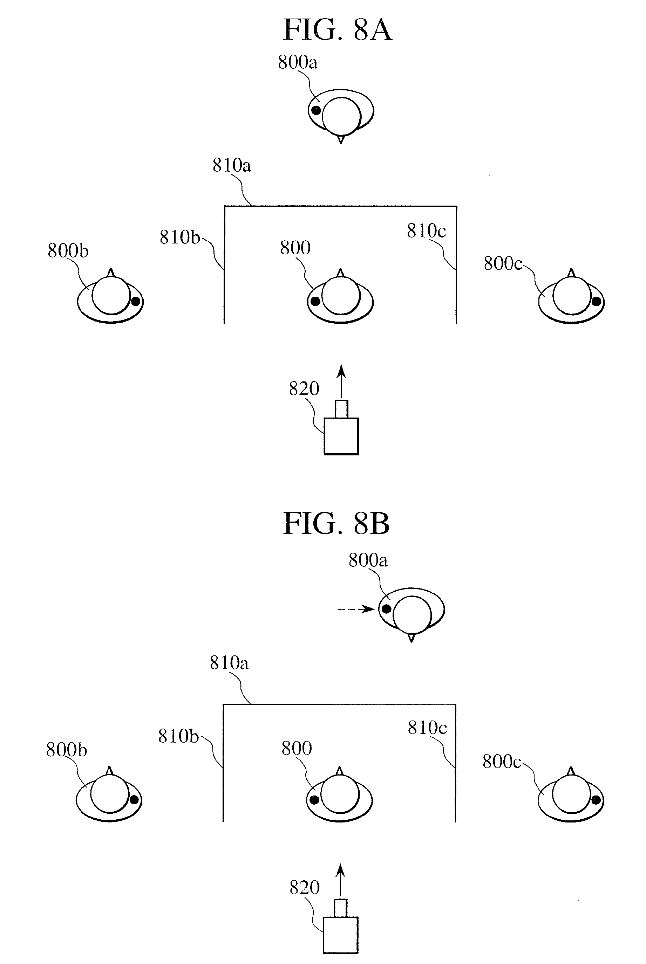

FIG. 8 shows a top view in which the virtual mirror planes 810a, 810b and 810c are placed in front of the real image object 800, in the left of the real image object 800, and in the right of the real image object 800, respectively. The mirror image allocation unit allocates each of a same number of mirror image objects 800a, 800b and 800c as the number of the virtual mirror planes (in this case, three), in the back of the virtual mirror planes 810a, 810b and 810c by a same procedure as used in step S 17 (see FIG. 8A).

In reality, it is necessary to consider infinite repetitions of mirror images consisting of mirror images of mirror images... However, in this embodiment, one mirror image object is situated for each virtual mirror plane to reduce the amount of computation. Next, the adjusting unit adjusts the real image object 800 and the mirror image object 800b so that these object are not close to each other in the view when viewed in the direction of the sightline from the viewpoint 820, by using a same procedure as steps S18 and S19. FIG. 8B shows an example of the mirror image object 800a having been moved in the direction of arrow.

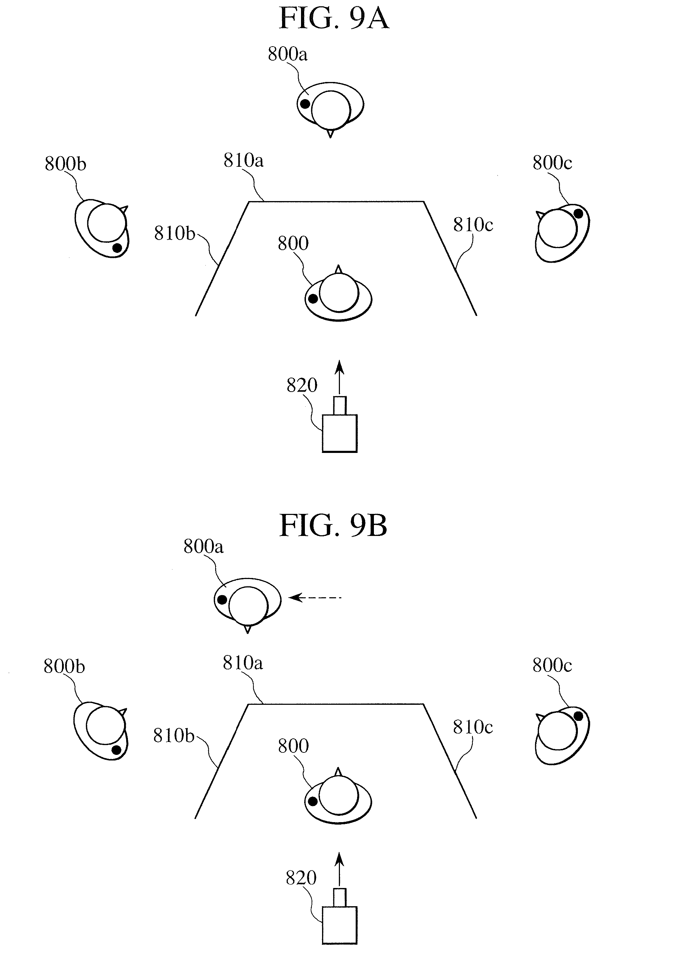

Similarly to FIG. 8, FIG. 9 shows a top view of 810b and 810c arranged diagonally with respect to the real image object 800 on both sides of the virtual mirror plane 810a.
The mirror image allocation unit allocates, as shown in FIG. 9A, each of the mirror image objects 800a, 800b and 800c in the same procedure as used in step S17, in the back of the virtual mirror planes 810a, 810b and 810c. The adjusting unit adjusts the real image object 800 and the mirror image object 800a so that these images are not close to each other in the view when they are seen from the viewpoint 820 in the direction of the sightline, by using the same procedures as used in steps S18 and S19. FIG. 9B shows the mirror image object 800a whose position has been moved in the direction of the arrow as a result of the adjustment.

Further, a method to avoid overlapping may be used when mirror images are close to each other (not shown). For example, in some cases the mirror image A and a mirror image B are close to each other when the mirror image A has been moved from the position where the real image and the mirror image A are close to each other in the view. In such a case, the adjusting unit may move the mirror image B with fixing the position of the mirror image A after the move. For the movement, the mirror image A may be taken as the real image of the above and the mirror image B is the mirror image of the above to use the method of moving the mirror images described above.

In this case, the position of the viewpoint (virtual camera) is not moved to the space of the mirror image existing over the virtual mirror plane 810a-810c.

In the above embodiment, the adjusting unit merely adjusts the position and the orientation of the mirror image object. However, when only the position and the orientation of the mirror image object is adjusted, sometimes the unnatural feel of the mirror image is significant. To alleviate this, the adjusting unit may adjust the position of the viewpoint and the direction of the sightline stored in the storage unit in accordance with the position and the orientation of the mirror image object. For example, when the mirror image object is moved, the viewpoint may be moved in the direction by a predetermined ratio. Then, for example, the orientation of the sightline may be adjusted so that a line extending from the viewpoint in the direction of the sight line passes a point at which the line has crossed the projection surface before the movement of the viewpoint

Further, in the above embodiment, the viewpoint (virtual camera) is prevented from going through the virtual mirror plane to enter the mirror image space. In this case, the generation unit may render a mirror image object situated in the mirror image space into which the viewpoint has entered. For a more natural feel, the generation unit may not render the mirror image object.

Further, in the above embodiment, the virtual mirror plane is not placed in the virtual space as an object. However, in order to express the difference between the real image and the mirror image, the virtual mirror plane may be placed on the virtual space as a surface object. Then, the mirror plane is multiplied by an alpha value representing transparency information. By doing so, it becomes possible to differentiate between the real image and the mirror image as if the virtual mirror plane has a degree of reflection so that the mirror image object is rendered transparent. This makes it possible to render the mirror image objects at different transparent rates and make the difference between each object prominent without producing an unnatural feel. When a plurality of virtual mirror planes are used, the ratio of multiplication of the alpha value is varied for each virtual mirror plane so that the degrees of reflection are different from each other. By doing so, it is possible to render the mirror image objects at different transparency rates to make the difference between the mirror image objects prominent.

Instead, the virtual mirror plane object may be colored, and multiplied by the alpha value. By doing so, the mirror image object would appear as if it was reflected on a colored mirror. This makes the difference between the mirror image object and the real image object prominent. When a plurality of virtual mirror planes are used, the colors of the respective virtual mirror planes may be changed. This makes it possible to more prominently express the difference between the mirror image objects.

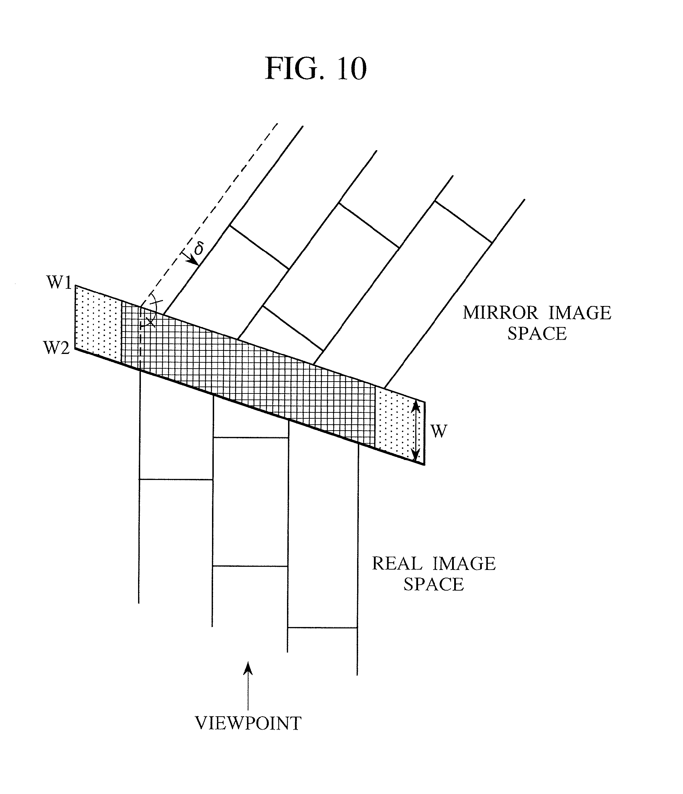

Besides, in order to make the virtual mirror plane more realistic, the interface between the real image space and the virtual mirror plane may be discontinuous. A normal mirror has a certain thickness and its glass portion causes refraction. Therefore, as shown in the top view of FIG. 10, the interface between the real image space and the virtual mirror plane is denoted as W2, the interface between the virtual mirror plane and the mirror image space is denoted as W1, and a space is provided between W1 and W2. Then, the space between W1 and W2 is painted with predetermined colors, such as, for example, gray and green that represents the margin of glass as the thickness of the virtual mirror plane.

In reality, the part between W1 and W2 is normally composed of glass.
However, if the refraction caused in the glass portion is not considered, the floor surface is located symmetrically to W1 (the extension of a part of the patterns on the floor surface is expressed by a dashed line, and the mirror image of the patterns are shown by a dotted line). Here, in order to appear as if a refraction is caused, an image of a floor surface that is symmetric to W1 is displaced by a distance δ so as to approach the viewpoint in parallel with W1 and the floor surface if the sight line is not perpendicular to the virtual mirror. Preferably, δ is set smaller than W (the width from W1 to W2). By doing so, it becomes possible to achieve a representation of the virtual mirror plane more close to the mirror in the real world. Or, linear conversion may be performed on an image attached to the floor so that the patterns of the floor surfaces are extended and the image is continuous with the floor surface rendered in the mirror image space, instead of coloring the space from W1 to W2 by a predetermined color.

The present application claims the benefit of the priority based on the Japanese Patent Application No. 2007-284836, the entire disclosure of which is incorporated herein by reference.

## Claims

1. An image processing device comprising:
a storage unit (201) that stores a position of a viewpoint situated in a virtual space and a direction of a sight line, a shape, a position and an orientation of a real image object situated in the virtual space, a position and an orientation of a virtual mirror plane situated in the virtual space, a shape, a position and an orientation of a mirror image object situated in the virtual space;
an updating unit (202) that updates at least any of the shape, the position and the orientation of the real image object, the position of the viewpoint and the direction of the sight line, which are stored in the storage unit (201) in accordance with an instruction input by a user or in accordance with a passage of time;
a mirror image allocation unit (203) that calculates a shape, a position and an orientation of a mirror image object that represents a mirror image of the real image on the virtual mirror plane and stores the shape, the position and the orientation in the storage unit (201);
a determination unit (204) that determines whether the real image object and the mirror image object are close to each other in a view when viewed in the direction of the sight line from the position of the viewpoint in the virtual space;
an adjusting unit (205) that, when it is determined that the real image object and the mirror image object are close to each other in the view, adjusts the position of the mirror image object stored in the storage unit so that the real image object and the mirror image object are not close to each other in the view;
a generating unit (206) that generates an image in which the virtual space is viewed in the direction of the sight line from the viewpoint, based on the shape, the position and the orientation of the stored real image object, the position of the viewpoint and the direction of the sight line, and the shape, the position and the orientation of the mirror image object.

2. The image processing device (200) according to claim 1, wherein the adjusting unit (205) adjusts the position and the orientation of the mirror image object by rotating the mirror image object about a predetermined rotation axis that passes the viewpoint.

3. The image processing device (200) according to claim 1, wherein the adjusting unit (205) adjusts the position of the mirror image object by moving the mirror image object in parallel with a surface of a floor situated in the virtual space while keeping a distance between the mirror image object and the viewpoint.

4. The image processing device (200) according to claim 1, wherein the determination unit (204) determines that the real image object and the mirror image object are close to each other in the view when the real image object and the mirror image object are projected on a projection surface situated at a position that is a predetermined distance apart in the direction of the sight line from the position of the viewpoint, and the projected images overlap with each other.

5. The image processing device (200) according to claim 1, wherein each of the real image object and the mirror image object is associated with a spherical bounding area that envelops the respective real image object and the mirror image object, and
the determination unit (204) determines that the real image object and the mirror image object are close to each other in the view when the respective bounding areas of the real image object and the mirror image object are projected on a projection surface situated at a position that is a predetermined distance apart in the direction of the sight line from the position of the viewpoint, and the projected images overlap with each other, and
the adjusting unit (205) adjusts the projected images so as to touch each other.

6. The image processing device (200) according to claim 2, wherein, when adjusting the position of the mirror image object, the adjusting unit (205) adjusts the position of the viewpoint stored in the storage unit (201) by an amount that is associated in advance with the amount of adjustment, and adjust the direction of the sightline stored in the storage unit (201) by an amount that is associated in advance with the amount of adjustment.

7. A method for processing an image for controlling an image processing device (200) including a storage unit (201), an updating unit (202), a mirror image allocation unit (203), a determination unit (204) and an adjusting unit (205) and a generating unit (206), the method comprising:
storing, by the storage unit (201), a position of a viewpoint situated in a virtual space and a direction of a sight line, a shape, a position and an orientation of a real image object situated in the virtual space, a position and an orientation of a virtual mirror plane situated in the virtual world, a shape, a position and an orientation of a mirror image object situated in the virtual space;
updating, by the updating unit (202), at least any of the shape, the position and the orientation of the real image object stored in the storage unit (201), and the position of the viewpoint, and the direction of the sight line, in accordance with an instruction input by a user or a passage of time;
calculating, by the mirror image allocation unit (203), a shape, a position and an orientation of a mirror image object that represents a mirror image of the real image on the virtual mirror and stores the shape, the position and the orientation in the storage unit (201);
determining, by the a determination unit (204), whether the real image object and the mirror image object are close to each other in the view when viewed in the direction of the sight line from the position of the viewpoint in the virtual space;
adjusting, by the adjusting unit (205), the position of the mirror image object stored in the storage unit so that the real image object and the mirror image object are not close to each other in the view, when it is determined that the real image object and the mirror image object are close to each other in the view; and
generating, by the generating unit (206), an image in which the virtual space is viewed in the direction of the sight line from the viewpoint, based on the shape, the position and the orientation of the stored real image object, the position of the viewpoint and the direction of the sight line and the shape, the position and the orientation of the mirror image object.

8. An information recording medium having recorded thereon a program that causes a computer to serve as:
a storage unit (201) that stores a position of a viewpoint situated in a virtual space and a direction of a sight line, a shape, a position and an orientation of a real image object situated in the virtual space, a position and an orientation of a virtual mirror plane situated in the virtual space, a shape, a position and an orientation of a mirror image object situated in the virtual space;
an updating unit (202) that updates at least any of the shape, the position and the orientation of the real image object, the position of the viewpoint and the direction of the sight line, which are stored in the storage unit (201) in accordance with an instruction input by a user or in accordance with a passage of time;
a mirror image allocation unit (203) that calculates a shape, a position and an orientation of a mirror image object that represents a mirror image of the real image on the virtual mirror plane and stores the shape, the position and the orientation in the storage unit (201);
a determination unit (204) that determines whether the real image object and the mirror image object are close to each other in a view when viewed in the direction of the sight line from the position of the viewpoint in the virtual space;
an adjusting unit (205) that, when it is determined that the real image object and the mirror image object are close to each other in the view, adjusts the position of the mirror image object stored in the storage unit so that the real image object and the mirror image object are not close to each other in the view;
a generating unit (206) that generates an image in which the virtual space is viewed in the direction of the sight line from the viewpoint, based on the shape, the position and the orientation of the stored real image object, the position of the viewpoint and the direction of the sight line, and the shape, the position and the orientation of the mirror image object.

9. A program for causing a computer to serve as an image processing device comprising:
a storage unit (201) that stores a position of a viewpoint situated in a virtual space and a direction of a sight line, a shape, a position and an orientation of a real image object situated in the virtual space, a position and an orientation of a virtual mirror situated in the virtual space, a shape, a position and an orientation of a mirror image object situated in the virtual space;
an updating unit (202) that updates at least one of the shape, the position and the orientation of the real image object, the position of the viewpoint, and the direction of the sight line stored in the storage unit (201) in accordance with an instruction input by a user or in accordance with a passage of time;
a mirror image allocation unit (203) that calculates a shape, a position and an orientation of a mirror image object that represents a mirror image of the real image on the virtual mirror and stores the shape, the position and the orientation in the storage unit (201);
a determination unit (204) that determines whether the real image object and the mirror object are close to each other in the view when viewed in the direction of the sight line from the position of the viewpoint in the virtual space;
an adjusting unit (205) that, when it is determined that the real image object and the mirror image object are close to each other in the view, adjusts the position of the mirror image object stored in the storage unit so that the real image object and the mirror image object are not close to each other in the view; and
a generating unit (206) that generates an image in which the virtual space is viewed in the direction of the sight line from the viewpoint, based on the shape, the position and the orientation of the stored real image object, the position of the viewpoint and the direction of the sight line, and the shape, the position and the orientation of the mirror image object.
